Europäisches Patentamt

European Patent Office

Office européen des brevets

(19)

(11) Numéro de publication : **0 119 112 B1**

(12) **FASCICULE DE BREVET EUROPÉEN**

(45) Date de publication du fascicule du brevet :
27.05.87

(51) Int. Cl.⁴ : **F 01 L   1/04**, F 16 H 53/02

(21) Numéro de dépôt : **84400212.1**

(22) Date de dépôt : **31.01.84**

(54) **Arbre à cames frittées collées.**

(30) Priorité : 24.02.83 FR 8303014

(43) Date de publication de la demande :
19.09.84 Bulletin 84/38

(45) Mention de la délivrance du brevet :
27.05.87 Bulletin 87/22

(84) Etats contractants désignés :
**DE GB IT**

(56) Documents cités :
DE-A- 2 336 241
DE-A- 2 905 706
FR-A-   552 028
FR-A- 2 296 478
GB-A-   896 781
Dubbel, Taschenbuch für den Maschinenbau, W. Beitz, H. Küttner, Springer Verlag, Berlin, Heidelberg, New York 1981, page 403

(73) Titulaire : **AUTOMOBILES CITROEN**
**62 Boulevard Victor-Hugo**
**F-92200 Neuilly-sur-Seine (FR)**

**AUTOMOBILES PEUGEOT, Société dite:**
**75, Avenue de la Grande-Armée**
**F-75761 Paris Cedex 16 (FR)**

(72) Inventeur : **Tayals, Jean-Pierre**
**8, Avenue Anatole France**
**F-93500 Pantin (FR)**
Inventeur : **Garnier, Patrick**
**1, Allée de l'Ivraie**
**F-78180 Montigny-le-Bretonneux (FR)**

(74) Mandataire : **Fabien, Henri et al**
**PEUGEOT SA. DAT / BPI 18, rue des Fauvelles**
**F-92250 La Garenne-Colombes (FR)**

## Description

L'invention concerne des perfectionnements apportés à un arbre à cames pour moteur à combustion interne, du genre de ceux qui sont entraînés par le moteur et servent à actionner les soupapes directement ou par l'intermédiaire de culbuteurs.

On sait qu'en général de tels arbres à cames sont forgés ou coulés et rectifiés. Certains ont proposé pour réduire les prix de revient de réaliser des arbres avec des cames distinctes rapportées et fixées. Ces propositions concernent, soit des arbres et des cames en matériaux pleins forgés ou moulés ; soit pour réduire les poids, des arbres creux en forme de tubes avec des cames réalisées sous forme de pièces annulaires à parois minces.

On connaît également, par le document DE-A-2 336 241, des arbres à cames, pleins ou creux, cylindriques ou à section profilée, sur lesquels viennent s'emboîter des paliers et des cames en acier fritté ou forgé, solidarisés par collage, soudage ou dilatation.

Le document DE-A-2 336 241 ne mentionne pas les arbres cannelés ou partiellement cannelés et les paliers sont rapportés comme les cames. Il n'est pas envisagé de paliers directement usinés sur l'arbre.

Le brevet FR 552 028 décrit un arbre cannelé, avec des cannelures en saillie obtenues après usinage de l'arbre. Les cames sont séparées par des entretoises et solidarisées à l'arbre par serrage aux extrémités. Les cannelures concernent toute la longueur de l'arbre à l'exception des extrémités filetées pour le serrage.

L'invention concerne un arbre à cames du type ainsi défini comportant un arbre creux réalisé à partir d'un tube profilé, étiré ou martelé, sur lequel sont rapportées des cames en matériau plein.

L'arbre à cames selon l'invention se caractérise en ce qu'il comporte des parties cannelées identiquement et des parties non cannelées, les cannelures des parties cannelées étant obtenues par roulage ou martelage et les cames étant fixées longitudinalement par collage et en rotation principalement par les cannelures et accessoirement par collage.

On utilise de préférence une colle qui polymérise à chaud. La colle intervient dans la fixation en rotation puisque les cannelures admettent forcément un jeu ».

L'invention se caractérise aussi par le fait que les cames sont en acier fritté réalisé à partir d'un mélange homogène de poudres de fer de carbone, de nickel et de molybdène ou de fer de carbone, de chrome, de molybdène et de vanadium mis en forme à la presse et fritté au four éventuellement sous vide. Ce mode de fabrication élimine les opérations de finition nécessaires si les cames sont forgées ou moulées.

L'invention se caractérise également par le fait que les cannelures qui solidarisent les cames en rotation sont en saillie sur le tube et en creux dans l'alésage des cames. Cette disposition permet d'engager les cames à travers les parties non cannelées du tube et en particulier à travers les paliers qui sont directement rectifiés sur le tube. Les cannelures en saillie sur le tube sont réalisées par roulage ou martelage sur une partie de l'arbre où viennent se fixer les cames. Elles sont réparties symétriquement à la périphérie de l'arbre de préférence à raison de douze ou vingt quatre cannelures ; ce qui permet avec les mêmes cames et le même tube la réalisation de moteurs de deux, trois ou quatre cylindres et les multiples six ; huit, douze cylindres. Les cannelures en creux dans l'alésage des cames sont réalisées à la presse en même temps que la came à l'état de comprimé précédent le frittage.

Les cannelures ne servent pas seulement à solidariser les cames à l'arbre ; elles servent également à définir l'orientation angulaire des cames. Ainsi les cames d'admission présentent dans leur alésage douze ou vingt quatre cannelures en creux disposées symétriquement et les cames d'échappement douze ou vingt quatre cannelures décalées par rapport aux axes de symétrie de la came.

La figure 1   montre l'arbre à came en coupe

La figure 2   montre une came d'admission

La figure 3   montre une came d'échappement

La figure 4   représente une section du tube dans la partie cannelée

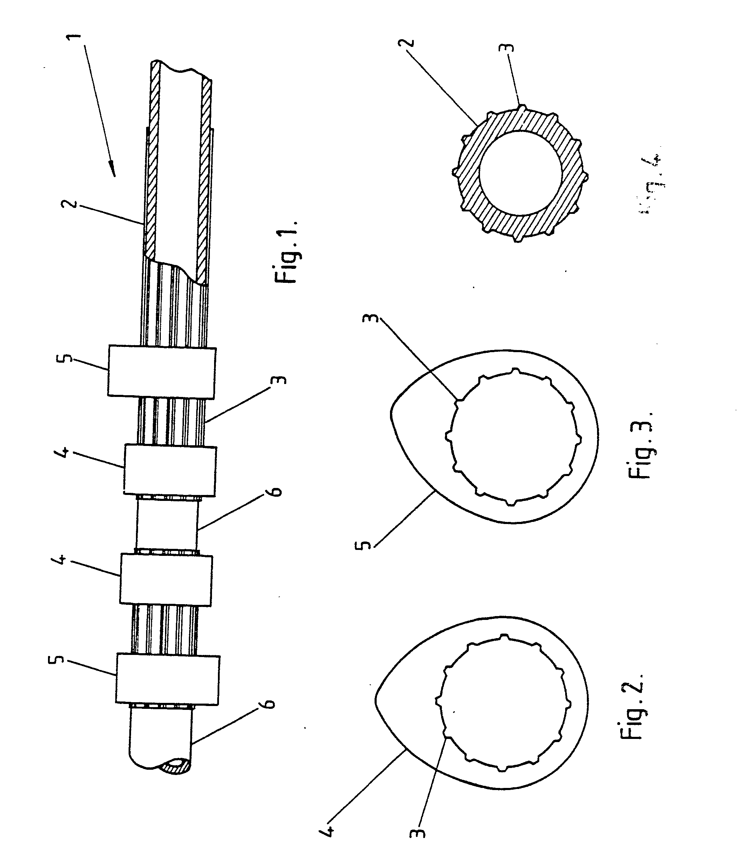

On voit sur la fig. 1 un arbre à cames 1 composé d'un tube étiré 2 avec des cannelures 3 périphériques disposées longitudinalement sur une partie de l'arbre 2.

On voit également en 4 des cames d'admission et en 5 des cames d'échappement montées sur l'arbre, et en 6 des paliers directement rectifiés sur la périphérie du tube 2. Ces paliers sont destinés à tourner sur des paliers fixes en deux parties appartenant au bâti.

On voit sur la fig. 2 une came d'admission 4 avec les cannelures 3 en creux dans l'alésage ; ces cannelures sont réparties de manière équidistantes ; elles sont symétriques par rapport à l'axe de symétrie de la came.

On voit sur la fig. 3 une came d'échappement 5 dont les cannelures 3 sont décalées par rapport à l'axe de symétrie. Ainsi les cannelures servent à assurer la fixation des cames et en même temps à définir leur orientation.

Avec les cannelures en creux dans l'alésage, les cames se prêtent bien à une construction frittée qui élimine avantageusement les opérations de finition nécessaires en construction forgée ou moulée.

## Revendications

1. Arbre à cames pour moteur à combustion interne, composé d'un tube comportant des cannelures extérieures longitudinales en saillie, et des cames indépendantes s'engageant librement dans les cannelures, caractérisé en ce qu'il comporte des parties cannelées identiquement et des parties non cannelées, les cannelures (3) des parties cannelées étant obtenues par roulage ou martelage et les cames (4, 5) étant, de façon connue en soi, fixées longitudinalement par collage et en rotation principalement par les cannelures (3) et accessoirement par collage.

2. Arbre à cames selon la revendication 1, caractérisé en ce qu'il comporte des paliers (6) directement rectifiés sur la surface extérieure du tube (2).

3. Arbre à cames selon les revendications 1 ou 2, caractérisé en ce que les cames (4, 5) sont en acier fritté réalisé, soit à partir d'un mélange homogène de poudres de fer, de carbone, de nickel et de molybdène, soit à partir d'un mélange homogène de poudres de fer, de carbone, de chrome, de molybdène et vanadium.

4. Arbre à cames selon l'une quelconque des revendications précédentes, caractérisé en ce que les cannelures (3) sont réparties de manière · équidistante sur la surface du tube (2) et dans l'alésage des cames (4, 5) symétriquement pour toutes les cames d'admission (4) et avec un décalage angulaire pour toutes les cames d'échappement (5).

## Claims

1. Camshaft for an internal combustion engine, consisting of a tube comprising projecting outer longitudinal splines and independent cams freely engaging in the splines, characterised in that it comprises identically splined portions and non-splined portions, the splines (3) of the splined portions being obtained by rolling or forging, and the cams (4, 5) being, in a manner known per se, secured longitudinally by bonding and in rotation mainly by means of the splines (3) and accessorily by bonding.

2. Camshaft according to claim 1, characterised in that it comprises bearing (6) directly machined on the external surface of the tube (2).

3. Camshaft according to claims 1 or 2, characterised in that the cams (4, 5) are of sintered steel, produced either from a homogenous mixture of powders of iron, of carbon, of nickel and of molybdenum, or from a homogenous mixture of powders of iron, of carbon, of chromium, of molybdenum and vanadium.

4. Camshaft according to any one of the preceding claims, characterised in that the splines (3) are distributed in equidistant manner over the surface of the tube (2), and within the bore of the cams (4, 5), symmetrically for all the inlet cams (4) and with an angular displacement for all the exhaust cams (5).

## Patentansprüche

1. Nockenwelle für Motor mit interner Verbrennung, bestehend aus einem Rohr mit äußeren longitudinalen, nach außen vorstehenden Riffelungen und davon unabhängigen Nocken, die frei in die Riffelungen eingreifen, dadurch gekennzeichnet, daß die Welle identische geriffelte Bereiche und nicht geriffelte Bereiche aufweist, wobei die Riffelungen (3) der geriffelten Bereiche durch Rollverformung oder Treiben bzw. Hämmern erhalten werden und die Nocken (4, 5) in an sich bekannter Weise longitudinal durch Verkleben und in Drehrichtung prinzipiell durch die Riffelungen (3) und zusätzlich durch Verklebung befestigt sind.

2. Nockenwelle nach Anspruch 1, gekennzeichnet durch direkt auf die Außenfläche des Rohrs (2) eingeschliffene Lager (6).

3. Nockenwelle nach Anspruch 1 oder 2, dadurch gekennzeichnet, daß die Nocken (4, 5) aus Sinterstahl bestehen, der ausgehend von einer homogenen Mischung aus Eisen-Kohlenstoff-Nickel- und Molybdänpulvern, sei es aus einer homogenen Mischung aus Eisen-Kohlenstoff-Chrom-Molybdän- und Vanadiumpulvern hergestellt ist.

4. Nockenwelle nach einem der vorstehenden Ansprüche, dadurch gekennzeichnet, daß die Riffelungen (3) mit gleichem Abstand auf der Oberfläche des Rohrs (2) verteilt und symmetrisch für alle Einlaßnocken (4) und winkelmäßig versetzt für alle Auslaßnocken (5) verteilt angeordnet sind.

Fig.1.

Fig.2.

Fig.3.

Fig.4

0 119 112